# EUROPEAN PATENT SPECIFICATION

(11) **EP 0 481 776 B1**
(45) Date of publication and mention of the grant of the patent: **29.12.1997**
(21) Application number: 91309570.9
(22) Date of filing: 17.10.1991
(51) Int. Cl.: G06K 19/077, G06K 19/07

(54) **TAB board and non-contact IC card which uses the same**
TAB-Band und kontaktfreie IC-Karte, für die dieses Band Verwendung findet
Bande TAB et carte à circuits imprimés l'utilisant

(30) Priority: 17.10.1990 JP 276548/90
(43) Date of publication of application: 22.04.1992
(73) Proprietor: MITSUBISHI DENKI KABUSHIKI KAISHA, Tokyo (JP)
(72) Inventor: Fujioka, Shuzo, c/o Mitsubishi Elec. Semiconductor, 1 Mizuhara 4-chome, Itami-shi, Hyogo-ken (JP); Takahira, Kenichi, c/o Mitsubishi Denki K. K., Itami-shi, Hyogo-ken (JP)
(74) Representative: Mounteney, Simon James

(56) References cited:
- EP-A- 0 376 062
- PATENT ABSTRACTS OF JAPAN vol. 11, no. 358 (P-639)(2805) 21 November 1987 & JP-A-62 134 780
- PATENT ABSTRACTS OF JAPAN vol. 11, no. 62 (P-551)(2509) 25 February 1987 & JP-A-61 226 887
- PATENT ABSTRACTS OF JAPAN vol. 11, no. 178 (P-584)(2625) 9 June 1987 & JP-A-62 008 283

## Description

The present invention relates to a Tape-automated bonding (TAB) board manufactured by using the TAB technology and a non-contact IC card which uses the TAB board.

### DESCRIPTION OF THE RELATED ART:

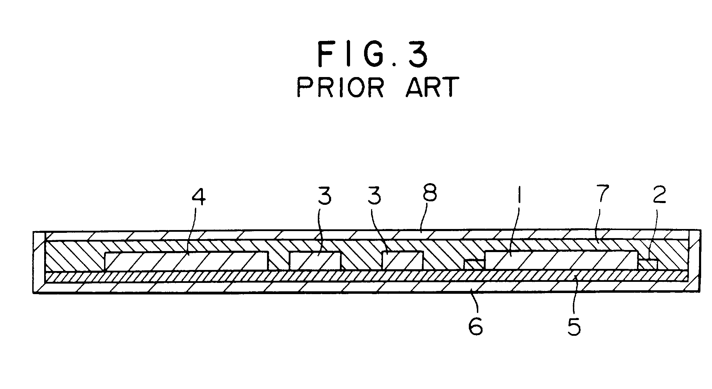

Fig.3 illustrates the cross sectional shape of a conventional non-contact IC card. A TAB package 1 including an IC, electronic parts 3 such as resistors and capacitors and a battery 4 serving as the power supply of this IC card are mounted on a printed board 5. The above-described elements are respectively and electrically connected to a wiring pattern (omitted from the illustration) formed on the surface of the printed board 5. The thus constituted printed board 5 is accommodated in a plastic package 6 and is coated with resin 7. Furthermore, a plastic panel 8 serving as a cover of the plastic package 6 is disposed on the resin 7. Reference numeral 2 represents an outer lead of the TAB package 1.

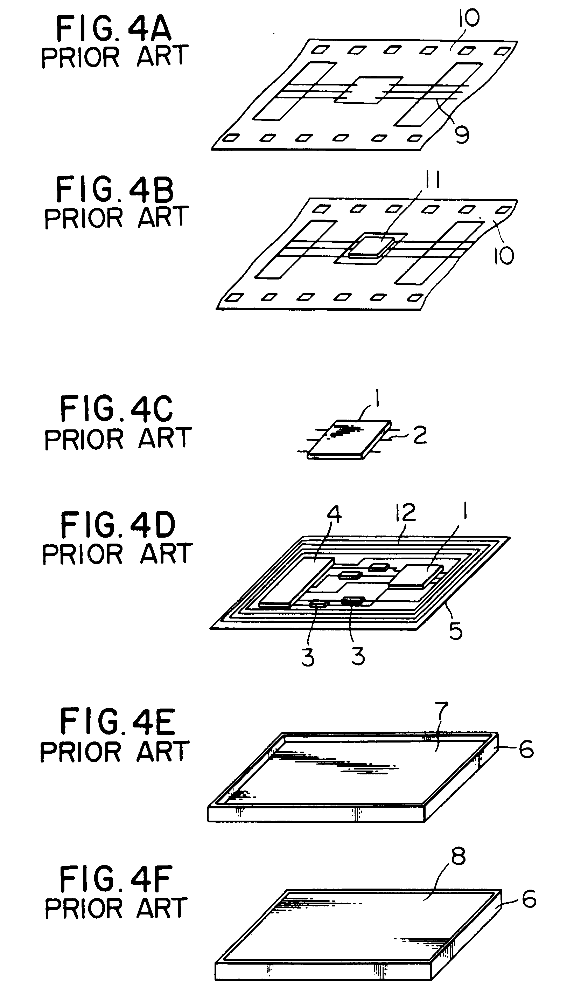

Then, a method of manufacturing the conventional non-contact IC card constituted as shown in Fig. 3 will be described with reference to Figs. 4A to 4F. First, a TAB lead frame 10 as shown in Fig. 4A and having lead wires 9 arranged therein is manufactured. Then, an IC chip 11 is, as shown in Fig. 4B, mounted on the TAB lead frame 10. After the IC chip 11 has been sealed up with resin, unnecessary lead frame portions are removed by cutting and the outer lead 2 is bent so that the TAB package 1 shown in Fig. 4C is manufactured. Then, the TAB package 1, the battery 4 and electronic parts 3 such as the resistors and capacitors are, as shown in Fig. 4D, mounted on the printed board 5 on which a coil 12 is formed. Then, the printed board 5 is placed in the plastic package 6 before the surface of the printed board 5 is, as shown in Fig. 4E, sealed up with the resin 7. Furthermore, the plastic panel 8 serving as the cover is placed on the resin 7 so that the above-described conventional non-contact IC card is manufactured.

Since the conventional non-contact IC cards have been manufactured by the method as described above, there rises a problem in that the necessary number of the manufacturing processes is too large and the excessively long time and large labor are thereby necessary. What is even worse, since the printed board 5 must be included, the thickness of the non-contact IC card cannot be reduced. Furthermore, as shown in Fig. 3, since the lower surface of the printed board 5 is not sealed although the upper portion of the printed board 5 is sealed up with resin, another problem rises in that the obtainable airtightness and the moisture resistance have not been satisfactory.

EP-A-0 376 062 discloses an electronic module for a small portable object. The module comprises a tape-automated bonding board, with electronic circuit components installed thereon. An annular coil is provided on the board in such a fashion as to encircle the circuit components. The coil is filled with resin and ultimately defines the module's outer wall. This arrangement does not overcome the above-described problems.

### SUMMARY OF THE INVENTION

Accordingly, an object of the present invention is to provide a module for an IC card with which a relatively thin non-contact IC card can be manufactured while decreasing the necessary number of the manufacturing processes.

Another object of the present invention is to provide a reliable non-contact IC card which uses the module and the thickness of which can be reduced.

With these objects in mind, the invention provides a module for a non-contact IC card as set out in Claims 1 and 2 and a non-contact IC card as set out in Claims 3 and 4. The invention also provides a method of manufacturing a module for an IC card as set out in Claim 5 and a method for manufacturing an IC card as set out in Claim 6.

Since the TAB board according to the present invention is arranged in such a manner that the wiring pattern including the coil for transmitting data in a non-contact manner is formed on the insulating film, the printed board can be eliminated from the structure.

Furthermore, the non-contact IC card according to the present invention is arranged in such a manner that the IC chip is mounted on the TAB board on which the coil is formed and is, as it is, sealed by the resin package.

### BRIEF DESCRIPTION OF THE DRAWINGS

Fig. 1 is a cross sectional view which illustrates an embodiment of a non-contact IC card according to the present invention;
Figs. 2A to 2E are perspective views which sequentially illustrate the method of manufacturing the non-contact IC card shown in Fig. 1;
Fig. 3 is a cross sectional view which illustrates a conventional IC card; and
Figs. 4A to 4F are perspective views which sequentially illustrate the method of manufacturing the non-contact IC card shown in Fig. 3.

### DESCRIPTION OF THE PREFERRED EMBODIMENTS

Preferred embodiments of the present invention will be described with reference to the drawings.

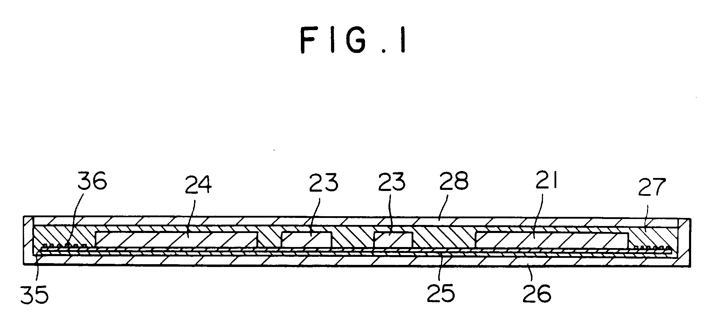

Referring to Fig. 1, a non-contact IC card according to an embodiment of the present invention comprises a TAB board 25 composed of an insulating film 35 and a wiring pattern (omitted from the illustration) formed on the insulating film 35. The wiring pattern includes a coil 36 spirally wound in the outer periphery of the insulating film 35. The coil 36 acts to transmit data to and from an outer terminal equipment (omitted from the illustration) in a non-contact manner.

Furthermore, an IC chip 21, electronic parts 23 such as resistors and capacitors and a battery 24 serving as the power supply of this non-contact IC card are mounted on the TAB board 25. The above-described elements are respectively and electrically connected to the unillustrated wiring pattern. The overall body of the thus formed TAB board 25 is sealed up by a resin package 27. Furthermore, a plastic package 26 and a plastic panel 28 are, as the exterior parts, formed so as to surround the resin package 27.

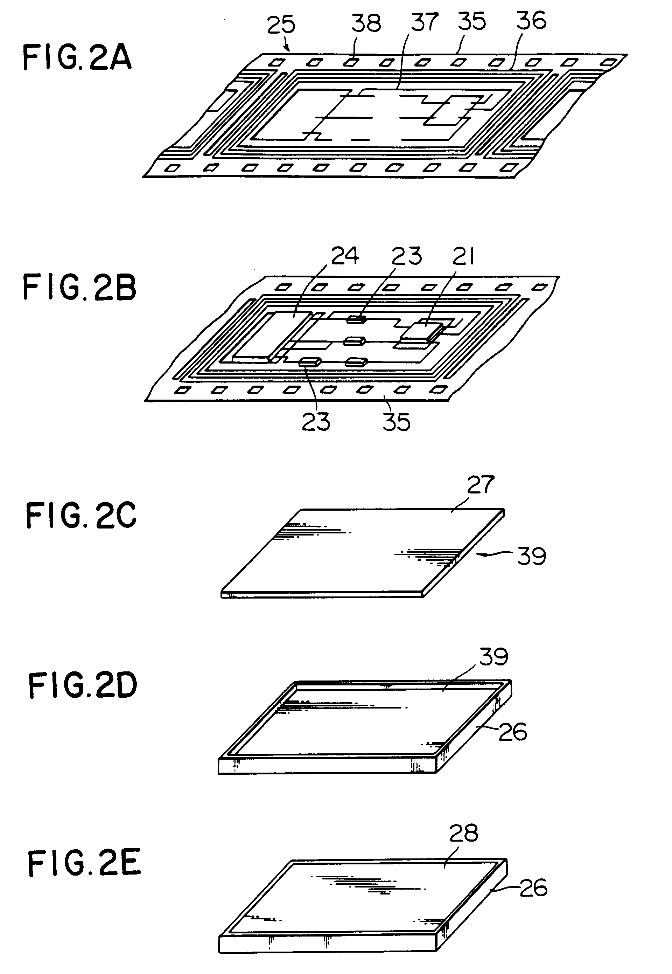

Then, a method of manufacturing the non-contact IC card according to this embodiment will be described with reference to Figs. 2A to 2E. First, as shown in Fig. 2A, a TAB board 25 on which a wiring pattern 37 is formed in the insulating film 35 is manufactured, the wiring pattern 37 including a coil 36. The insulating film 35 on which the TAB board 25 is formed is in the form of an elongated shape in such a manner that a plurality of the same wiring patterns 37 which respectively correspond to the IC cards are repeatedly formed on the insulating film 35. Furthermore, sprocket holes 38 are, at predetermined intervals, formed on the two side portions of the insulating film 35, the sprocket holes 38 acting to move the TAB board 25.

Then, as shown in Fig. 2B, the IC chip 21, the electronic parts 23 and the battery 24 are mounted on the TAB board 25. The thus mounted elements are electrically connected to the wiring pattern 37. As a result, the circuit portion of the non-contact IC card is formed. In this state, the circuit test can be carried out.

Then, as shown in Fig. 2C, the TAB board 25 is sealed up by the resin package 27 at the circuit portion of each of the IC cards before unnecessary portion are removed by cutting. As a result, a module 39 for the non-contact IC card is formed.

Then, the module 39 is, as shown in Fig. 2D, placed in the plastic package 26 before the module 39 is, from an upper portion, covered with the plastic panel 28 as shown in Fig. 2E. Thus, the non-contact IC card is manufactured.

As described above, according to this embodiment, all of the elements are mounted on the TAB board 25 so as to be sealed with the resin as it is. Therefore, a non-contact IC card the thickness of which can be reduced can be manufactured in a reduced number of manufacturing processes. Furthermore, since the circuit portion is perfectly sealed up in the resin package 27, the moisture resistance and the reliability can be improved. In addition, the circuit portions of a plurality of IC cards can be subjected to the circuit test while connecting the same to one another in a tape-like shape by the insulating film 35. Therefore, the circuit test can be automated.

Although the module 39 is, according to this embodiment, wrapped with exterior members such as the plastic package 26 and the plastic panel 28, another structure may be employed which is arranged in such a manner that the module 39 is not wrapped by the exterior member but is used as the IC card as it is. In this case, the size of the module 39 may be arranged to be the size of the desired IC card.

By the use of the invention, the thickness of an assembly in which an IC chip is mounted on an insulating film can be reduced to 0.5 mm or thereabouts.

Insulating materials which can be used as insulating films in performing the invention include, by way of example only, polyimide films, glass-epoxy materials, and so on.

## Claims

1. A module for a non-contact IC card, comprising:
a tape-automated bonding board (25) defined by an insulating film (35) provided with a wiring pattern (37), provided on a first surface of the insulating film (35);
a plurality of circuit components (21, 23, 24) mounted on the first surface of the insulating film (35);
a coil (36) for transmitting data in a non-contact manner, mounted on the first surface of the insulating film (35); and
a quantity of resin (27), covering the first surface of the insulating film (35) and the said circuit components (21, 23, 24) and wiring pattern (37) provided thereon;
characterised in that the coil (36) is defined by part of the said wiring pattern (37); and the resin (27) completely encapsulates the said tape-automated bonding board (25) and the said circuit components (21, 23, 24), provided thereon.

2. A module for a non-contact IC card according to Claim 1, wherein the said coil (36) is spirally wound in the outer periphery of the insulating film (35).

3. A non-contact IC card comprising a module according to Claim 1 or 2, and further comprising an exterior housing (26, 28) surrounding the resin package (27).

4. A non-contact IC card according to Claim 3, wherein the housing (26, 28) is made from plastic.

5. A method of manufacturing a module for a non-contact IC card comprising:
(i) mounting a plurality of electronic components (21, 23, 24) upon a tape-automated bonding board (25), formed from an insulating film (35) provided with a wiring pattern (37) including a non-contact coil (36), so as to electrically connect the electronic components (21, 23, 24) to the wiring pattern (37); and
(ii) sealing the resulting structure in a package of resin (27).

6. A method of manufacturing an IC card comprising forming a module in accordance with Claim 5 and
(iii) placing the module (39) in a package (26); and
(iv) covering the module (26) with a panel (28) to enclose it within the package (26).

## Patentansprüche

1. Ein Modul für eine kontaktlose IC-Karte, die aufweist:
ein Band (25) für das automatische Streifenkontaktieren, das durch einen Isolierfilm (35) definiert ist, der mit einem Verdrahtungsmuster (37) versehen ist, das auf einer ersten Oberfäche des Isolierfilms (35) bereitgestellt ist;
eine Vielzahl von Schaltungskomponenten (21,23,24), die auf der ersten Oberfläche des Isolierfilms (35) montiert sind;
eine Spule (36) zum Übertragen von Daten in einer kontaktlosen Weise, die auf der ersten Oberfläche des Isolierfilms (35) montiert ist; und
eine Harzmenge (27), die die erste Oberfläche des Isolierfilms (35) und die Schaltungskomponenten (21,23,24) und das Verdrahtungsmuster (37), die darauf bereitgestellt sind, bedeckt;
dadurch gekennzeichnet,
daß die Spule (36) durch einen Teil des Verdrahtungsmusters (37) definiert ist; und daß das Harz (27) das Band (25) für das automatische Streifenkontaktieren und die Schaltungskomponenten (21,23,24), die darauf bereitgestellt sind, vollständig einschließt.

2. Ein Modul für eine kontaktlose IC-Karte nach Anspruch 1, worin die Spule (36) spiralförmig am äußeren Rand des Isolierfilms (35) gewickelt ist.

3. Eine kontaktlose IC-Karte, die ein Modul nach Anspruch 1 oder 2 aufweist, und weiter ein äußeres Gehäuse (26,28), das das Harzgehäuse (27) umgibt, aufweist.

4. Eine kontaktlose IC-Karte nach Anspruch 3, wobei das Gehäuse (26,28) aus Kunststoff gefertigt ist.

5. Ein Verfahren zur Herstellung eines Moduls für eine kontaktlose IC-Karte, mit:
(i) Montieren einer Vielzahl von elektronischen Komponenten (21,23,24) auf einem Band (25) für das automatische Streifenkontaktieren, das von einem Isolierfilm (35), der mit einem Verdrahtungsmuster (37) versehen ist, das eine kontaktlose Spule (36) umfaßt, ausgebildet ist, so daß die elektronischen Komponenten (21,23,24) mit dem Verdrahtungsmuster (37) elektrisch verbunden werden; und
(ii) Versiegeln der sich ergebenden Struktur in einer Harzpackung (27).

6. Ein Verfahren zur Herstellung einer IC-Karte, die das Ausbilden eines Moduls nach Anspruch 5 aufweist, und
(iii) das Anordnen des Moduls (39) in einem Gehäuse (26); und
(iv) das Bedecken des Moduls (26) mit einer Platte (28), um es innerhalb des Gehäuses (26) einzuschließen.

## Revendications

1. Module pour une carte à circuit intégré sans contact comprenant :
une plaque à soudure sur bande (25) définie par un film isolant (35) pourvu d'un motif de câblage (37), prévue sur une première surface du film isolant (35) ;
un certain nombre de composants de circuit (21, 23, 24) montés sur la première surface du film isolant (35) ;
une bobine (36) pour transmettre des données d'une manière sans contact, montée sur la première surface du film isolant (35) ; et
une quantité de résine (27), recouvrant la première surface du film isolant (35) et lesdits composants de circuit (21, 23, 24) et le motif de câblage (37) prévus sur celui-ci ;
caractérisé en ce que la bobine (36) est définie par une partie dudit motif de câblage (37) ; et la résine (27) encapsule complètement ladite plaque de soudure sur bande (25) et lesdits composants de circuit (21, 23, 24) prévus sur celle-ci.

2. Module pour une carte à circuit intégré sans contact selon la revendication 1, dans lequel la bobine précitée (36) est enroulée en spirale dans la périphérie externe du film isolant (35).

3. Carte à circuit intégré sans contact comprenant un module selon la revendication 1 ou 2, et comprenant de plus un boîtier externe (26, 28) entourant le boîtier de résine (27).

4. Carte à circuit intégré sans contact selon la revendication 3, dans laquelle le boîtier (26, 28) est réalisé à partir de plastique.

5. Procédé de fabrication d'un module pour une carte à circuit intégré sans contact comprenant :
(i) monter un certain nombre de composants électroniques (21, 23, 24) sur une plaque à soudure sur bande (25), formée à partir d'un film isolant (35) pourvu d'un motif de câblage (37) comprenant une bobine sans contact (36), afin de relier électriquement les composants électroniques (21, 23, 24) au motif de câblage (37) ; et
(ii) sceller la structure résultante dans un boîtier de résine (27).

6. Procédé de fabrication d'une carte à circuit intégré comprenant la formation d'un module selon la revendication 5 et
(iii) placer le module (39) dans un boîtier (26) ; et
(iv) recouvrir le module (26) d'un panneau (28) pour l'enfermer dans le boîtier (26).
